# EUROPEAN PATENT SPECIFICATION

(11) **EP 0 964 027 B1**
(45) Date of publication and mention of the grant of the patent: **12.05.2004**
(21) Application number: 99201860.6
(22) Date of filing: 10.06.1999
(51) Int. Cl.: C08K 5/03

(54) **Flame-retarded transparent plastics**
Flammhemmende transparente Plastikmaterialien
Matières plastiques ignifugées transparentes

(30) Priority: 11.06.1998 IL 12486898
(43) Date of publication of application: 15.12.1999
(73) Proprietor: Bromine Compounds Ltd., Beer-Sheva 84101 (IL)
(72) Inventor: Finberg, Ita, 84465 Beer-Sheva (IL); Utevski, Lev, Beer-Sheva (IL)
(74) Representative: Long, Giorgio

(56) References cited:
- EP-A- 0 481 126
- EP-A- 0 557 950
- EP-A- 0 571 036
- CHEMICAL ABSTRACTS, vol. 127, no. 18, 3 November 1997 (1997-11-03) Columbus, Ohio, US; abstract no. 248838, XP002116085 & REYES ET AL.: "FR-1808, a novel flame retardant..." RECENT ADV. FLAME RETARD. POLYM. MATER., vol. 6, 1995, pages 226-238,

## Description

### Field of the Invention

This invention relates to new flame-retarded transparent plastics. More specifically, the invention relates to the use of polyhalogenated trimethylphenyl indanes in transparent plastics.

### Background of the Invention

Flame retardants (FR) are the most important family of plastic additives. Synthetic polymers and copolymers are often compounded with the fire retardant compounds in order to improve their FR properties. Typical FRs comprise inorganic and organic compounds, particularly aromatic compounds. Halogenated compounds are the most effective, and bromine is often the preferred halogen. The addition of FR compounds also affects the mechanical properties of the plastic material, often negatively.

European Patent No. 571036 claims thermally stable fire retardants which also impart good impact properties. The fire retardants of said application are additives of polyhalogenated trimethylphenyl indanes.

The preparation of 1,1,5-trimethyl-3-phenyl indan (TMPI) is disclosed in DE 2,906,294, DE 2,659,597 and USP 3,161,692.

Providing FR transparent plastic materials is an important goal. However, most FR materials available in the art present severe drawbacks. For instance, some of them are based on brominated diphenyloxide nuclei (such as, decabromodiphenyl oxide), which is suspected of releasing dioxins under some conditions. Other FR compounds cannot be incorporated in sufficient amounts without severely affecting the transparency of the resulting composition.

It is therefore an object of the present invention to provide FR additives for use in transparent plastic materials, which overcome the aforesaid drawbacks of prior art additives.

It is another object of the invention to provide transparent FR thermoplastic compositions containing a very high (greater than 15% by weight) load of FR material. Such compositions are useful in a variety of applications, as will be further described below.

### SUMMARY OF THE INVENTION

The invention is directed to flame-retarded transparent plastic composition comprising polyhalogenated trimethylphenyl indan. According to a preferred embodiment of the invention, polyhalogenated trimethylphenyl indanes having each 3 to 9 halogen atoms are utilized. Also according to a preferred embodiment of the invention, the number of halogen atoms of at least a part of the polyhalogenated trimethylphenyl indan in the mixture is 7 or 8, and the halogen is bromine. Illustrative examples of such polyhalogenated trimethylphenyl indanes are a mixture of hexa-, hepta-, and octabromotrimethylphenyl indan, which mixture is also known as FR-1808 ex Bromine Compounds Ltd.

The halogen can be bromine, or a mixture of bromine and chlorine.

Any suitable plastic material can be employed. According to a preferred embodiment of the invention the transparent plastic is selected from polycarbonate, polymethylmethacrylate, polystyrene and styrene-acrylonitrile, copolymer poly (vinyl chloride) (PVC).

The amount of polyhalogenated trimethylphenyl indan which can be present in the plastic material varies with the intended use. For instance, for rendering transparent plastic materials flame-retarded, with acceptable impact strength of the resulting products, total contents of up to about 8% are usually preferred. For other uses, such as for the manufacturing of transparent elements such as lens, light guides, optical fibers and compact disks, having a high refractive index, much higher contents, up to about 40% by weight, are needed, preferably in an amount of up to about 15% by weight.

Throughout this specification, unless specifically otherwise stated, all percentages are by weight.

The invention is also directed to a method for the preparation of transparent plastic flame-retarded material comprising mixing said plastic material with a flame-retardant effective amount of a polyhalogenated trimethylphenyl indan. According to a preferred embodiment of the invention, the polyhalogenated trimethylphenyl indan is a mixture of brominated derivatives containing 70-75% bromine.

The invention also encompasses the use of polyhalogenated trimethylphenyl indanes in the preparation of transparent plastic materials having a higher refractive index. The mixture of brominated derivatives containing 70-75% bromine, such as FR-1808, is a particularly suitable compound for this purpose, since it permits to provide very high percentages of bromine in the plastic composition, which is needed in order to obtain high refractive indexes. Contents of FR-1808 as high as 40% are easily obtained, with only minor yellowing of the plastic composition, while maintaining complete transparency. These amounts are outstanding, in view of the known art which typically incorporates amounts not higher than 15%. Other additives can also be present, such as Stabilizers, Antioxidants, Lubricants, Pigments, cross linking agents, FR synrengists.

All the above and other characteristics and advantages of the invention will be better understood through the following illustrative and non-limitative examples of preferred embodiments.

### Example 1

Tested specimens where prepared according to the following steps:
1) Plastic drying was carried out at the appropriate temperature for each material:
   Polycarbonate (PC) - 120°C
   Polymethylmethacrylate (PMMA) - 105°C
   Polystyrene (PS) - 80°C
   The time of drying for all plastics was three hours.
   The plastic pellets and of FR-1808 powder were then manually mixed and compounded in a twin-screw extruder ex Berstorff at the following temperatures:
   - PS:: 40-80-190-200-210-210-210-210°C
   - PMMA:: 40-180-190-200-220-220-220-220°C
   - PC:: 40-180-220-240-260-260-260-260-260°C
   Injection molding in Allrounder 221-75-350 ex. Arburg at temperatures:
   - PS:: 170-210-210-210°C
   - PMMA:: 180-220-220-220°C
   - PC:: 220-260-260-260°C

The formulations so obtained are given in Table I.

**Table I**

| **Properties of Transparent Plastics** | | | | | | | |
|---|---|---|---|---|---|---|---|
| **Formulations →** **Components ↓** | **Unit** | **1** | **2** | **3** | **4** | **5** | **6** |
| PS 102E ex Carmel Olefin | % | 100 | 85 | | | | |
| PMMA Oroglas V826 ex Rohm & Haas | % | | | 100 | 85 | | |
| PC Makrolon 2405 ex Bayer | % | | | | | 100 | 85 |
| FR-1808 | % | | 15 | | 15 | | 15 |
| Flammability UL-94 | 3.2 mm | NR | V-2 | NR | V-2 | V-2 | V-0 |
| Flammability UL-94 | 1.6 mm | NR | V-2 | NR | V-2 | V-2 | V-0 |
| Izod notched impact (ASTM D-256-81) | J/m | 19 | 25 | 52 | 49 | 780 | 41 |
| MFI (ASTM D-1238-82) | g/10 min | 5 | 13 | 7 | 4 | 19 | 32 |

### Example 2

Operating as in Example 1, polybromotrimethylphenyl indan (FR-1808) was compared with other commercial FR materials polycarbonate. Tested specimens where prepared according to the following steps:
- Plastics drying at temperature 120°C. The time of drying for all plastics was 3 hours.
- Manual mixing of plastics pellets and of FR powder.
- Compounding in twin-screw extruder ex Berstorff at temperatures: 40-180-220-240-260-260-260-260-260°C
- All compounds were dried at 120°C for 3 hours.
- Injection molding in Allrounder 221-75-350 ex. Arburg at temperatures:220-260-260-260°C.

The formulations and the results so obtained are given in Table II.

**Table II**

| **Formulations →** **Components ↓** | **Unit** | **1** | **2** | **5** | **3** | **4** | **6** |
|---|---|---|---|---|---|---|---|
| PC Makrolon 2405 ex Bayer | % | 85 | 70 | 60 | 85 | 85 | 100 |
| FR-1808⁽¹⁾ | % | 15 | 30 | 40 | | | |
| Saytex 8010⁽²⁾ | % | | | | 15 | | |
| F-2400E⁽³⁾ | % | | | | | 15 | |
| Transparency | | yes | yes | yes | no | no | yes |

| | | | | | | | |
|---|---|---|---|---|---|---|---|
| ⁽¹⁾ A mixture of Hexa-, hepta-, and octabromotrimethylphenyl indane. | | | | | | | |
| ⁽²⁾ Proprietary FR ex-Albemarle. | | | | | | | |
| ⁽³⁾ Brominated epoxy polymer ex DSBG. | | | | | | | |

### Example 3

Operating as in Example 1, Octachlorotrimethylphenyl indan and Pentabromotrimethylphenyl indan were compounded with polystyrene.

The formulation and properties are given in Table III.

**Table III**

| **FORMULATION →** **COMPONENTS ↓** | **Units** | **1** | **2** |
|---|---|---|---|
| PS 102E ex Carmel Olefin | % | 95 | 95 |
| Octachlorotrimethylphenyl indan | % | 5 | |
| Pentabromotrimethylphenyl indan | % | | 5 |
| Transparency | | yes | yes |

## Claims

1. Flame-retarded transparent plastic composition comprising polyhalogenated trimethylphenyl indan, the transparent plastic being selected from polycarbonate, polymethylmethacrylate, polystyrene, styrene-acrylonitrile copolymer and poly (vinyl chloride).

2. A composition according to claim 1, wherein the polyhalogenated trimethylphenyl indan is a mixture of polyhalogenated trimethylphenyl indanes having each 3 to 9 halogen atoms.

3. A composition according to claim 2, wherein the number of halogen atoms of at least a part of the polyhalogenated trimethylphenyl indanes in the mixture is 7 or 8.

4. A composition according to claim 2 or 3, wherein the halogen is bromine or a mixture of bromine and chlorine.

5. A composition according to any one of claims 1 to 4, wherein the polyhalogenated trimethylphenyl indan is present in an amount of up to about 40% by weight.

6. A composition according to claim 5, wherein the polyhalogenated trimethylphenyl indan is present in an amount of up to about 15% by weight.

7. A method for the preparation of transparent plastic flame-retarded material according to any one of claims 1 to 4, comprising mixing the plastic material according to any one of claims 1-4 with a flame-retardant effective amount of polyhalogenated trimethylphenyl indan.

8. Use of polyhalogenated trimethylphenyl indanes in the preparation of transparent plastic materials according to any one of claims 1 to 6, having a high refractive index.

9. Use according to claim 8, wherein the polyhalogenated trimethylphenyl indan is present in an amount of up to about 40% by weight.

10. Use according to claim 9, wherein the polyhalogenated trimethylphenyl indan is present in an amount greater than 10% by weight.

## Patentansprüche

1. Flammverzögerte transparente Kunststoffzusammensetzung, umfassend mehrfach halogeniertes Trimethylphenylindan, wobei der transparente Kunststoff aus Polycarbonat, Polymethylmethacrylat, Polystyrol, Styrol-Acrylnitril-Copolymer und Polyvinylchlorid ausgewählt ist.

2. Zusammensetzung gemäß Anspruch 1, wobei das mehrfach halogenierte Trimethylphenylindan ein Gemisch von mehrfach halogenierten Trimethylphenylindanen mit jeweils 3 bis 9 Halogenatomen ist.

3. Zusammensetzung gemäß Anspruch 2, wobei die Anzahl der Halogenatome bei mindestens einem Teil der mehrfach halogenierten Trimethylphenylindane in dem Gemisch 7 oder 8 beträgt.

4. Zusammensetzung gemäß den Ansprüchen 2 oder 3, wobei das Halogenatom für Brom oder ein Gemisch von Brom und Chlor steht.

5. Zusammensetzung gemäß einem der Ansprüche 1 bis 4, wobei das mehrfach halogenierte Trimethylphenylindan in einer Menge von bis zu etwa 40 Gew.-% vorhanden ist.

6. Zusammensetzung gemäß Anspruch 5, wobei das mehrfach halogenierte Trimethylphenylindan in einer Menge von bis zu etwa 15 Gew.-% vorhanden ist.

7. Verfahren zur Herstellung eines transparenten flammverzögerten Kunststoffmaterials gemäß einem der Ansprüche 1 bis 4, umfassend Mischen des Kunststoffinaterials gemäß einem der Ansprüche 1 bis 4 mit einer flammhemmend wirksamen Menge an mehrfach halogeniertem Trimethylphenylindan.

8. Verwendung von mehrfach halogenierten Trimethylphenylindanen bei der Herstellung von transparenten Kunststoffmaterialien gemäß einem der Ansprüche 1 bis 6, welche einen hohen Brechungsindex aufweisen.

9. Verwendung gemäß Anspruch 8, wobei das mehrfach halogenierte Trimethylphenylindan in einer Menge von bis zu etwa 40 Gew.-% vorhanden ist.

10. Verwendung gemäß Anspruch 9, wobei das mehrfach halogenierte Trimethylphenylindan in einer Menge von größer als 10 Gew.-% vorhanden ist.

## Revendications

1. Composition plastique transparente ignifugée comprenant de l'indane de triméthylphényle polyhalogéné; le plastique transparent étant sélectionné parmi le polycarbonate, le poly(méthacrylate de méthyle), le polystyrène, le copolymère styrène-acrylonitrile et le poly(chlorure de vinyle).

2. Composition selon la revendication 1, dans laquelle l'indane de triméthylphényle polyhalogéné est un mélange d'indanes des triméthylphényle polyhalogénés possédant chacun 3 à 9 atomes d'halogène.

3. Composition selon la revendication 2, dans laquelle le nombre d'atomes d'halogène d'au moins une partie des indanes des triméthylphényle polyhalogénés dans le mélange est de 7 ou 8.

4. Composition selon la revendication 2 ou 3, dans laquelle l'halogène est du brome ou un mélange de brome et de chlore.

5. Composition selon l'une quelconque des revendications 1 à 4, dans laquelle l'indane de triméthylphényle polyhalogéné est présent en une quantité allant jusqu'à environ 40 % en poids.

6. Composition selon la revendication 5, l'indane de triméthylphényle polyhalogéné est présent en une quantité allant jusqu'à environ 15 % en poids.

7. Procédé pour la préparation de matière plastique transparente ignifugée selon l'une quelconque des revendications 1 à 4, comprenant le mélange de la matière plastique selon l'une quelconque des revendications 1 à 4 avec une quantité efficace ignifuge d'indane de triméthylphényle polyhalogéné.

8. Utilisation d'indanes des triméthylphényle polyhalogénés dans la préparation de matières plastiques transparentes selon l'une quelconque des revendications 1 à 6, ayant un indice de réfraction élevé.

9. Utilisation selon la revendication 8, dans laquelle l'indane de triméthylphényle polyhalogéné est présent en une quantité allant jusqu'à environ 40 % en poids.

10. Utilisation selon la revendication 9, dans laquelle l'indane de triméthylphényle polyhalogéné est présent en une quantité supérieure à 10 % en poids.
